# NEUE EUROPÄISCHE PATENTSCHRIFT

(11) **EP 1 813 831 B2**
(45) Veröffentlichungstag und Bekanntmachung des Hinweises auf die Entscheidung über den Einspruch: **07.06.2017**
(45) Hinweis auf die Patenterteilung: 17.02.2010
(21) Anmeldenummer: 06026391.0
(22) Anmeldetag: 20.12.2006
(51) Int. Cl.: F16D 13/72

(54) **Kühlmediumverteileinrichtung**
Cooling medium distribution device
Dispositif de répartition

(30) Priorität: 26.01.2006 DE 102006003923
(43) Veröffentlichungstag der Anmeldung: 01.08.2007
(73) Patentinhaber: Schaeffler Technologies AG & Co. KG, 91074 Herzogenaurach (DE)
(72) Erfinder: Metzinger, Manuel, 77815 Bühl (DE); Agner, Ivo, 77815 Bühl (DE); Izso, Gabor, 77815 Bühl (DE)
(74) Vertreter: Patentanwaltskanzlei WILHELM & BECK

(56) Entgegenhaltungen:
- WO-A-2004/104439
- DE-A1- 3 047 778
- US-A- 4 473 144
- US-A- 4 971 184
- US-A1- 2003 085 094
- US-A1- 20030 085 094

## Beschreibung

Die Erfindung betrifft eine Kühlmediumverteileinrichtung für eine nasslaufende Kupplungseinrichtung, mit mehreren Kühlmediumverteilflächen, an denen entlang Kühlmedium radial nach außen gefördert wird. Die Erfindung betrifft des Weiteren eine nasslaufende Kupplungseinrichtung mit antriebsseitigen und abtriebsseitigen Reibeinheiten, die aus einer Mehrzahl schichtweise in axialer Richtung antriebsseitig und abtriebsseitig abwechselnder Reibpartner gebildet sind, die zur Bildung eines Reibeingriffs axial miteinander verpressbar sind.

Aufgabe der Erfindung ist es, die Lebensdauer einer nasslaufenden Kupplungseinrichtung, wie sie zum Beispiel aus dem US-Patent US 4,446,953 bekannt ist, zu erhöhen.

Aus der US 4,971,184 ist bereits eine Kühlmediumverteileinrichtung bekannt. Die Kühlmediumverteileinrichtung ist als konischer spray Stecker ausgeführt, der beispielsweise als Plastikspritzgussteil gefertigt werden kann. Grundsätzlich weist er eine spitz zulaufende kegelförmige Form auf, wobei auf der Oberfläche des Kegels Rippen aufgebracht sind. Zwischen den Rippen sind als Vertiefungen in die Oberfläche der Kegelmantelfläche Kanäle eingebracht.

Die Aufgabe ist bei einer Kühlmediumverteileinrichtung für eine nasslaufende Kupplungseinrichtung nach Anspruch 1 gelöst. Durch die Gestaltung der Kühlmediumverteilflächen kann das Kühlmedium gezielt an unterschiedliche axiale Positionen gefördert werden. Dadurch wird eine definierte Versorgung von unterschiedlichen Kupplungsbelagelementen mit Kühlmedium ermöglicht. Die Kühlmediumverteilflächen sind auf einer Seite des Kühlmediumkörpers vorgesehen.

Die Kühlmediumverteilflächen sind an Rampen vorgesehen, die radial nach außen, in Umfangsrichtung betrachtet, unterschiedliche Steigungen aufweisen. Durch die im Betrieb wirkende Fliehkraft wird das Kühlmedium radial nach außen zu den Kupplungsbelagelementen gefördert. Durch die unterschiedlichen Steigungswinkel der Rampen spritzt das Kühlmedium an unterschiedlichen axialen Positionen und in unterschiedlichen Richtungen an den radial äußeren Rändern der Rampen ab.

Ein weiteres bevorzugtes Ausführungsbeispiel der Kühlmediumverteileinrichtung ist **dadurch gekennzeichnet, dass** die Kühlmediumverteilflächen von Stegen begrenzt sind. Unter Drehzahl kommt das Kühlmedium mit den Stegen, die vorzugsweise spiralförmig von innen nach außen verlaufen, in Kontakt und wird dadurch in seiner radialen Beschleunigung und Fließrichtung beeinflusst.

Vorzugsweise weist der Kühlmediumverteilkörper radial innen eine plane Kreisringscheibenfläche auf, von der sich die Kühlmediumverteilflächen radial nach außen erstrecken.

Ein weiteres bevorzugtes Ausführungsbeispiel der Kühlmediumverteileinrichtung ist **dadurch gekennzeichnet, dass** die Kühlmediumverteileinrichtung eine Antriebshülse umfasst. Die Antriebshülse dient vorzugsweise dazu, die Kühlmediumverteileinrichtung antriebsmäßig mit einer Kühlmediumpumpe zu verbinden, die über die Kühlmediumverteileinrichtung angetrieben wird.

Ein weiteres bevorzugtes Ausführungsbeispiel der Kühlmediumverteileinrichtung ist **dadurch gekennzeichnet, dass** die Antriebshülse Kopplungselemente aufweist. Die Kopplungselemente dienen vorzugsweise dazu, die Antriebshülse antriebsmäßig mit einem Antriebselement einer Kühlmediumpumpe zu verbinden, die über die Kühlmediumverteileinrichtung angetrieben wird.

Ein weiteres bevorzugtes Ausführungsbeispiel der Kühlmediumverteileinrichtung ist **dadurch gekennzeichnet, dass** die Kühlmediumverteileinrichtung einen Aufnahmeteller umfasst. Vorzugsweise ist an dem Aufnahmeteller radial innen der Kühlmediumverteilkörper befestigt.

Ein weiteres bevorzugtes Ausführungsbeispiel der Kühlmediumverteileinrichtung ist **dadurch gekennzeichnet, dass** der Aufnahmeteller radial außen Kopplungselemente aufweist. Die Kopplungselemente dienen vorzugsweise dazu, die Kühlmediumverteileinrichtung drehfest mit einem Kupplungsteil, insbesondere einem Lamellenträger, zu verbinden, das beziehungsweise der wiederum mit Motordrehzahl angetrieben ist.

Ein weiteres bevorzugtes Ausführungsbeispiel der Kühlmediumverteileinrichtung ist **dadurch gekennzeichnet, dass** die Kühlmediumverteilflächen radial außen eine scharfe Kante aufweisen. Dadurch wird an den Kühlmediumabspritzstellen ein unverfälschtes Abspritzen des Kühlmediums sichergestellt. Vorzugsweise hat die Kante einen Radius, der kleiner als 0,5 mm ist.

Bei einer nasslaufenden Kupplungseinrichtung mit antriebsseitigen und abtriebsseitigen Reibeinheiten, die aus einer Mehrzahl schichtweise in axialer Richtung antriebsseitig und abtriebsseitig abwechselnder Reibpartner gebildet sind, die zur Bildung eines Reibeingriffs axial miteinander verpressbar sind, ist die oben angegebene Aufgabe durch eine vorab beschriebene Kühlmediumverteileinrichtung gelöst.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine perspektivische Darstellung einer erfindungsgemäßen Kühlmediumverteileinrichtung;
Figur 2 eine perspektivische Schnittdarstellung der Kühlmediumverteileinrichtung aus Figur 1;
Figur 3 eine dreiteilige Kühlmediumverteileinrichtung, wie sie in Figur 1 perspektivisch dargestellt ist, in Explosionsdarstellung;
Figur 4 einen Schnitt eines Kühlmediumverteilkörpers aus Figur 3 in perspektivischer Darstellung;
Figur 5 eine zweiteilige Kühlmediumverteileinrichtung, wie sie in Figur 1 perspektivisch dargestellt ist, in Explosionsdarstellung;
Figur 6 einen Schnitt eines Kühlmediumverteilkörpers aus Figur 5 in perspektivischer Darstellung;
Figur 7 eine Drehmomentübertragungseinrichtung mit einer Kühlmediumverteileinrichtung, wie sie in den Figuren 1 bis 6 in verschiedenen Ansichten und Ausführungsbeispielen dargestellt ist, im Halbschnitt;
Figur 8 die Ansicht eines Längsschnitts durch die in den Figuren 1 und 2 dargestellte Kühlmediumverteileinrichtung;
Figur 9 eine perspektivische Darstellung der in Figur 8 dargestellten Kühlmediumverteileinrichtung und
Figur 10 fünf verschiedene Varianten eines Kühlmediumverteilkörpers mit unterschiedlichen Steggeometrien.

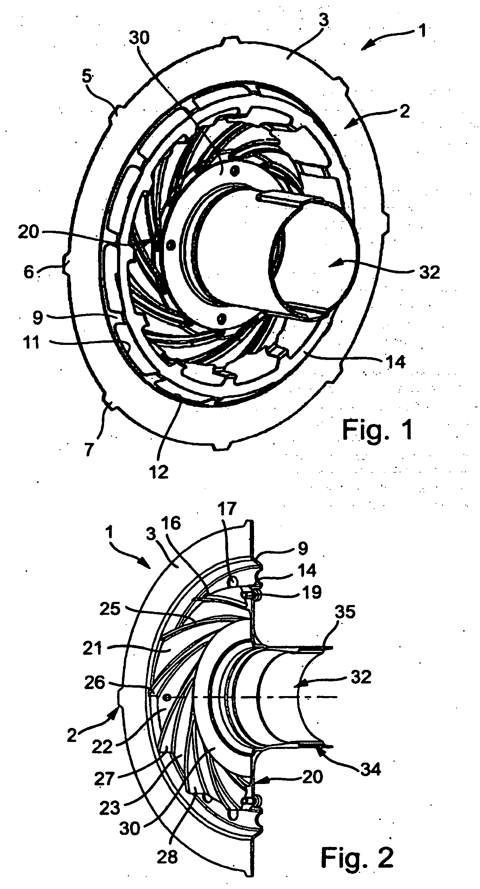

In den Figuren 1 und 2 ist eine Kühlmediumverteileinrichtung 1 in verschiedenen Ansichten perspektivisch dargestellt. Die Kühlmediumverteileinrichtung 1 dient dazu, Kühlmedium zu verteilen. Bei dem Kühlmedium handelt es sich vorzugsweise um Öl, das in einer nasslaufenden Kupplungseinrichtung zur Kühlung von Reiblamellen verwendet wird. Die erfindungsgemäße Kühlmediumverteileinrichtung 1 wird daher auch als Ölverteiler bezeichnet. Die Kühlmediumverteileinrichtung 1 umfasst einen Aufnahmeteller 2, der im Wesentlichen die Gestalt einer Kreisringscheibe 3 aufweist. Radial außen gehen von der Kreisringscheibe 3 Zähne 5, 6 und 7 aus, die Kopplungselemente darstellen. Radial innen ist von der Kreisringscheibe 3 ein Kragen 9 abgewinkelt. In dem Kragen 9 sind eine Vielzahl von Durchtrittsöffnungen 11, 12 ausgespart, die den Durchtritt von Kühlmedium in radialer Richtung ermöglichen. Der Kragen 9 geht in einen Befestigungsflansch 14 über, der mehrere Durchgangslöcher 16, 17 aufweist. die Durchgangslöcher 16, 17 dienen zum Durchführen von Befestigungselementen 19, mit deren Hilfe ein Kühlmediumverteilkörper 20 an dem Aufnahmeteller 2 befestigt ist.

Der Kühlmediumverteilkörper 20 weist eine Vielzahl von Kühlmediumverteilflächen 21 bis 23 auf, die gleichmäßig über den Umfang verteilt sind. Die Kühlmediumverteilflächen 21 bis 23 werden jeweils von zwei Stegen 25, 26; 26, 27; 27,28 begrenzt. Darüber hinaus sind die Kühlmediumverteilflächen 21 bis 23 Oberflächen von Rampen, die radial außen von einer planen Kreisringscheibenfläche 30 ausgehen und unterschiedliche Steigungen aufweisen. Radial innen ist an der Kreisringscheibenfläche 30 eine Antriebshülse 32 angebracht. Die Antriebshülse 32 hat im Wesentlichen die Gestalt eines Kreiszylindermantels, an dem diametral gegenüberliegend zwei Kopplungselemente 34, 35 ausgebildet sind. Der Aufnahmeteller 2, der Kühlmediumverteilkörper 20 und die Antriebshülse 32 können einstückig miteinander verbunden sein. Stattdessen können die Teile aber auch separat ausgebildet sein und mit Hilfe von weiteren Befestigungsmitteln, wie Schrauben oder Nieten aneinander befestigt sein. Es ist auch möglich, die Einzelteile stoffschlüssig miteinander zu verbinden, zum Beispiel durch Schweißen.

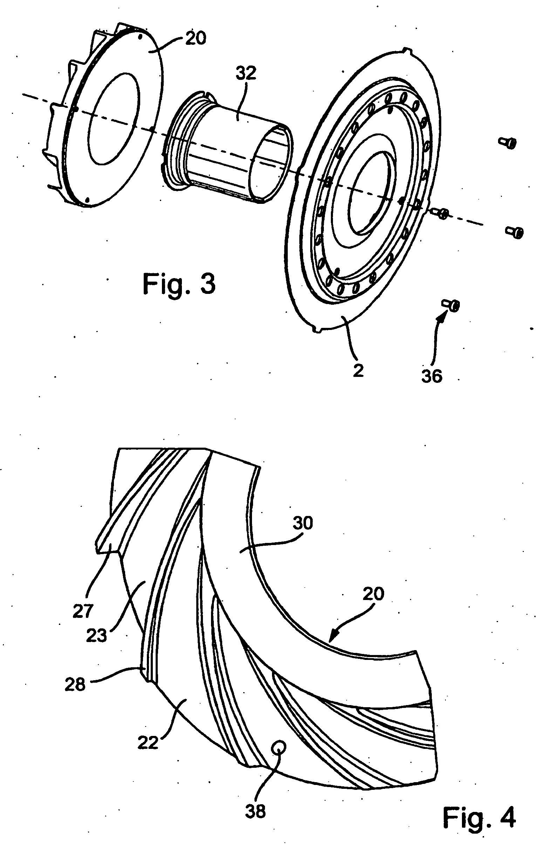

In den Figuren 3 und 4 ist eine erfindungsgemäße Kühlmediumverteileinrichtung dargestellt, die dreiteilig aus einem Aufnahmeteller 2, einem Kühlmediumverteilkörper 20 und einer Antriebshülse 32 kombiniert ist. Der Kühlmediumverteilkörper 20 ist aus Kunststoff gegossen und durch Schnappverbindungselemente oder einen Bajonettverschluss an dem Aufnahmeteller 2 befestigbar. Alternativ kann der Kühlmediumverteilkörper 20 auch mit Hilfe von Schrauben 36, die durch Durchgangslöcher 38 in dem Kühlmediumverteilkörper 20 hindurch gesteckt werden, an dem Aufnahmeteller 2 befestigt sein. Bei der Antriebshülse 32 und dem Aufnahmeteller 2 handelt es sich um zwei separate Blechteile.

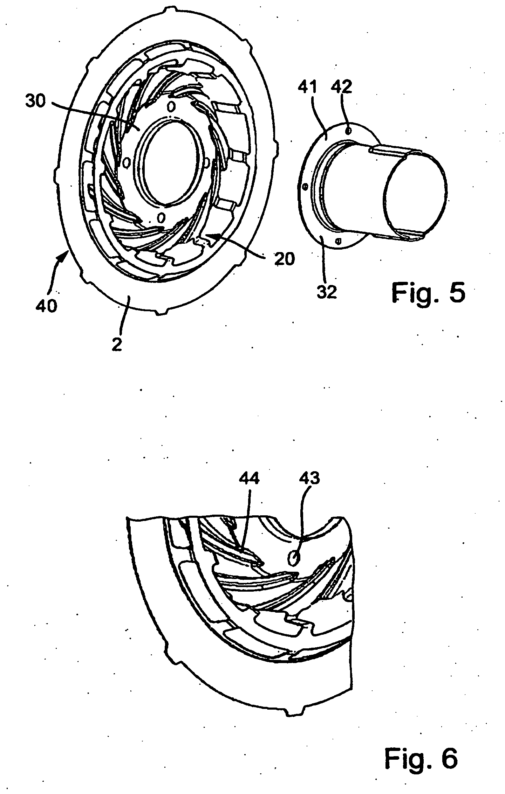

In den Figuren 5 und 6 ist gezeigt, dass der Aufnahmeteller 2 und der Kühlmediumverteilkörper 20 auch einteilig in einem Blechteil 40 zusammengefasst sein können. Das Blechteil 40 kann zum Beispiel durch Stanzen und Umformen aus Blech hergestellt werden. Die ebenfalls als Blechformteil ausgebildete Antriebshülse 32 kann mit Hilfe von (nicht dargestellten) Nietbolzen an dem Kühlmediumverteilkörper 20 befestigt werden. Zu diesem Zweck weist die Antriebshülse 32 einen Befestigungsflansch 41 mit Durchgangslöchern 42 auf. Die Durchgangslöcher 42 des Befestigungsflansches 41 sind beim Zusammenbau mit weiteren Durchgangslöchern 43 zur Deckung zu bringen, die in der Kreisringscheibenfläche 30 ausgespart sind. In Figur 6 ist des Weiteren angedeutet, dass die Stege 44 durch Umformen aus dem ursprünglichen Blechteil herausgestellt sind.

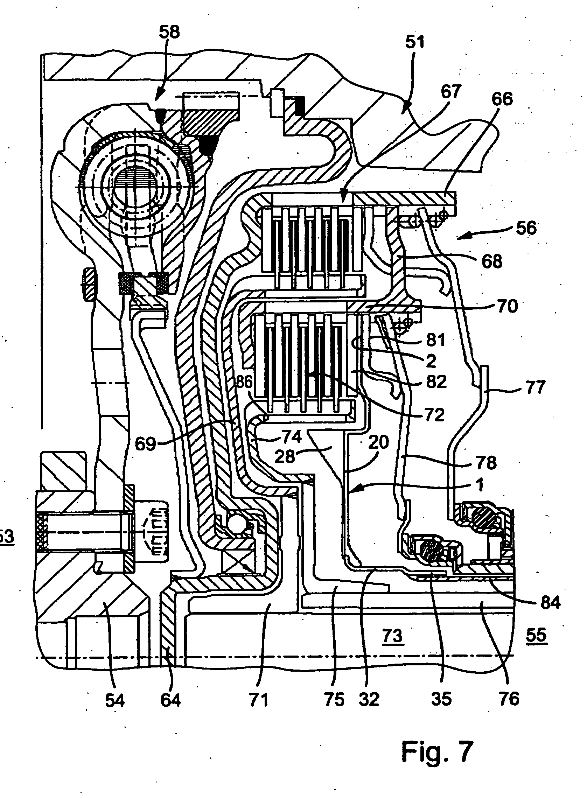

In Figur 7 ist ein Teil eines Antriebsstrangs 51 eines Kraftfahrzeugs dargestellt. Zwischen einer Antriebseinheit 53, insbesondere einer Brennkraftmaschine, von der eine Kurbelwelle 54 ausgeht, und einem Getriebe 55 ist eine nasslaufende Doppelkupplung 56 in Lamellenbauweise angeordnet. Zwischen die Antriebseinheit 53 und die Doppelkupplung 56 ist eine Drehschwingungsdämpfungseinrichtung 58 geschaltet. Bei der Drehschwingungsdämpfungseinrichtung 58 handelt es sich um ein Zweimassenschwungrad.

Die Kurbelwelle 54 der Brennkraftmaschine 53 ist über Schraubverbindungen fest mit einem Eingangsteil der Drehschwingungsdämpfungseinrichtung 58 verbunden. Das Eingangsteil der Drehschwingungsdämpfungseinrichtung 58 ist unter Zwischenschaltung von Schraubenfedern mit einem Ausgangsteil der Drehschwingungsdämpfungseinrichtung 58 gekoppelt. Das Ausgangsteil der Drehschwingungsdämpfungseinrichtung 58 wiederum ist über ein Verbindungsteil mit einem integrierten Nabenteil drehfest mit einem Eingangsteil 64 der Doppelkupplung 56 verbunden. Das Kupplungseingangsteil 64 ist einstückig mit einem Außenlamellenträger 66 einer ersten Lamellen-Kupplungsanordnung 67 verbunden. Radial innerhalb des Außenlamellenträgers 66 ist ein Innenlamellenträger 69 der ersten Lamellen-Kupplungsanordnung 67 angeordnet. Der Innenlamellenträger 69 ist radial innen an einem Nabenteil 71 befestigt, das über eine Verzahnung drehfest mit einer ersten Getriebeeingangswelle 73 verbunden ist.

Der Außenlamellenträger 66 der ersten Lamellen-Kupplungsanordnung 67 ist über ein Kopplungsteil 68 drehfest mit einem Außenlamellenträger 70 einer zweiten Lamellen-Kupplungsanordnung 72 verbunden. Radial innerhalb des Außenlamellenträgers 70 ist ein Innenlamellenträger 74 der zweiten Lamellen-Kupplungsanordnung 72 angeordnet, der radial innen fest mit einem Nabenteil 75 verbunden ist. Das Nabenteil 75 ist über eine Verzahnung drehfest mit einer zweiten Getriebeeingangswelle 76 verbunden, die als Hohlwelle ausgebildet ist. In der zweiten Getriebeeingangswelle 76 ist die erste Getriebeeingangswelle 73 drehbar angeordnet. Die beiden Lamellen-Kupplungsanordnungen 67 und 72 werden über Betätigungshebel 77 und 78 betätigt, deren radial innere Enden sich an Betätigungslagern abstützen. Die Betätigungslager werden mit Hilfe von Betätigungskolben in axialer Richtung betätigt.

Die Betätigungskraft des Betätigungshebels 78 wird über einen Drucktopf 81 auf eine Lamelle 82 der Lamellen-Kupplungsanordnung 72 übertragen. In axialer Richtung zwischen dem Drucktopf 81 und der Lamelle 82 ist ein Aufnahmeteller 2 einer Kühlmediumverteileinrichtung 1, wie sie in den Figuren 1 bis 6 in verschiedenen Ausführungsformen dargestellt ist, in den Außenlamellenträger 70 eingehängt. Der Außenlamellenträger 70, der drehfest mit dem Außenlamellenträger 66 verbunden ist, ist antriebsmäßig mit der Kurbelwelle 54 verbunden. Daher dreht sich der Aufnahmeteller 2 im Betrieb der Brennkraftmaschine 53 mit Motordrehzahl. Der Kühlmediumverteilkörper 20 der Kühlmediumverteileinrichtung 1 ist radial innerhalb von Durchtrittsöffnungen 86 angeordnet, die den Durchtritt von Kühlmedium in radialer Richtung durch den Innenlamellenträger 74 hindurch ermöglichen. Die Antriebshülse 32 der Kühlmediumverteileinrichtung 1 ist mit einem Pumpenantriebsrohr 84 verbunden, das wiederum drehfest und mit einem Antriebsritzel einer (nicht dargestellten) Kühlmediumpumpe verbunden ist.

In der nasslaufenden Doppelkupplung 56 wird ein spezielles Kühlmedium, insbesondere ein spezielles Kühlöl, verwendet, um die im Betrieb an den Lamellen-Kupplungsanordnungen 67 und 72 entstehende Reibungswärme abzuführen. Zur Kühlung der Reibbeläge strömt das Kühlöl jeweils zwischen einer Stahllamelle und einer Reiblamelle hindurch, wobei ein Temperaturaustausch stattfindet. Durch Nuten in den Reibbelägen wird das Kühlöl radial nach außen geleitet. Auf diese Art und Weise wird das Kühlöl durch beide Lamellen-Kupplungsanordnungen 72 und 67 radial nach außen geführt. Anschließend vermischt sich das Kühlöl mit Öl in einem Getriebesumpf. Von hier wird es dann zum Kühler und dann wieder in die Kupplung gepumpt. Um die Belagsnuten gleichmäßig mit Kühlöl zu versorgen, wird das Kühlöl über die spezielle Geometrie der Kühlmediumverteilflächen an unterschiedliche axiale Positionen gefördert. Durch die im Betrieb auftretende Fliehkraft wird das Kühlöl radial nach außen an die Kupplungsbeläge geschleudert, wo es in die Belagnuten eintreten kann.

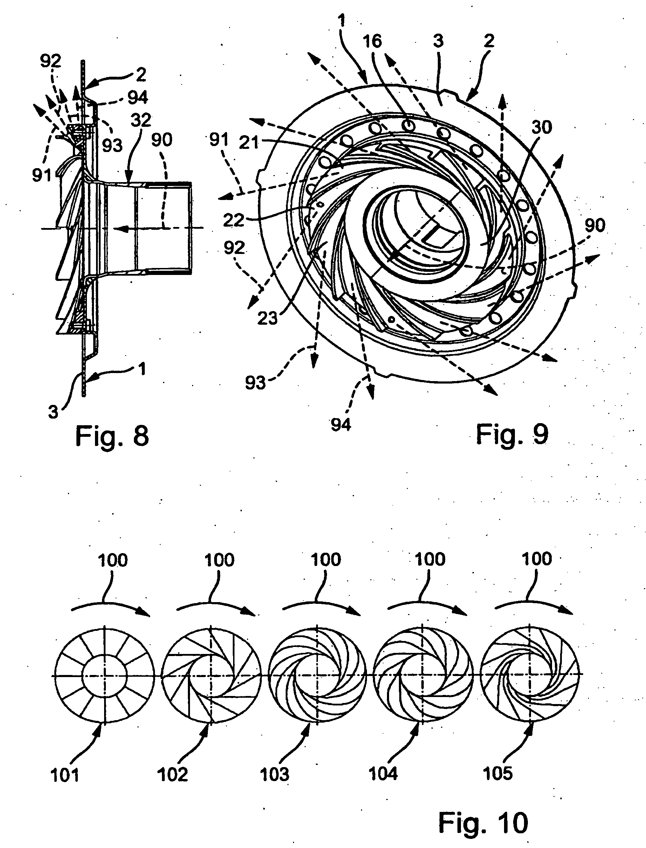

In den Figuren 8 und 9 ist durch einen Pfeil 90 angedeutet, dass das von der Kühlölpumpe geförderte Kühlöl durch die Antriebshülse 32 aus dem Inneren der Antriebshülse 32 zu der planen Kreisringscheibenfläche 30 gelangt. Durch die von der Motordrehzahl bewirkte Fliehkraft verteilt sich der von der Kühlölpumpe geförderte Volumenstrom gleichmäßig auf die Kühlmediumverteilflächen 21 bis 23, die an den Rampen ausgebildet sind. Dabei wird das Kühlöl durch die Stege 25 bis 28 zusätzlich beschleunigt und spritzt auf der durch die unterschiedlichen Rampensteigungswinkel vorgegebenen Richtung am Rampenende radial außen ab. Über die Anzahl der Rampen kann die Kühlölmenge für einen Belag abgestimmt werden. Besonders stark belastete Reibbeläge können so bevorzugt gekühlt werden. Durch Pfeile 91 bis 94 ist das am Rampenende abspritzende Kühlöl angedeutet. In den Figuren 8 und 9 sieht man, dass das Kühlöl von den unterschiedlichen Rampen sowohl in axialer Richtung als auch in tangentialer Richtung in unterschiedlichen Richtungen abspritzt.

In Figur 10 ist angedeutet, dass der Kühlmediumverteilkörper unterschiedliche Rampengeometrien 101 bis 105 aufweisen kann. Die Drehrichtung im Uhrzeigersinn ist jeweils durch einen Pfeil 100 angedeutet. Je größer die Anzahl der Rampen ist, desto gleichmäßiger können die einzelnen Belagsebenen versorgt werden. Allerdings besteht bei zu vielen Rampen die Gefahr, dass das Öl in unerwünschter Weise verwirbelt wird. Durch eine scharfe Kante am Rampenende wird ein unverfälschtes Abspritzen des Kühlöls in die vorgegebene Richtung ermöglicht. Der zugehörige Radius ist kleiner als 0,5 mm. Bei 101 ist angedeutet, dass die Stege sich in radialer Richtung gerade erstrecken können. Bei 102 ist angedeutet, dass sich die Stege auch in tangentialer Richtung erstrecken können. Bei 103 ist angedeutet, dass die Stege jeweils die Gestalt von Kreisbögen aufweisen, die spiralförmig angeordnet sind. Bei 104 und 105 ist angedeutet, dass die Stege auch aus geraden Teilstücken mit Kreisbögen kombiniert sein können.

### Bezugszeichenliste

- 1.: Kühlmediumverteileinrichtung
- 2.: Aufnahmeteller
- 3.: Kreisringscheibe
- 5.: Kopplungselement
- 6.: Kopplungselement
- 7.: Kopplungselement
- 9.: Kragen
- 11.: Durchtrittsöffnung
- 12.: Durchtrittsöffnung
- 14.: Befestigungsflansch
- 16.: Durchgangsloch
- 17.: Durchgangsloch
- 19.: Befestigungselement
- 20.: Kühlmediumverteilkörper
- 21.: Kühlmediumverteilflächen
- 22.: Kühlmediumverteilflächen
- 23.: Kühlmediumverteilflächen
- 25.: Steg
- 26.: Steg
- 27.: Steg
- 28.: Steg
- 30.: Kreisringscheibenfläche
- 32.: Antriebshülse
- 34.: Kopplungselement
- 35.: Kopplungselement
- 36.: Schrauben
- 38.: Durchgangsloch
- 40.: Blechteil
- 41.: Befestigungsflansch
- 42.: Durchgangsloch
- 43.: Durchgangsloch
- 44.: Steg
- 51.: Antriebsstrang
- 53.: Antriebseinheit
- 54.: Kurbelwelle
- 55.: Getriebe
- 56.: Doppelkupplung
- 58.: Drehschwingungsdämpfungseinrichtung
- 64.: Kupplungseingangsteil
- 66.: Außenlamellenträger
- 67.: erste Lamellen-Kupplungsanordnung
- 68.: Kopplungsteil
- 69.: Innenlamellenträger
- 70.: Außenlamellenträger
- 71.: Nabelteil
- 72.: zweite Lamellen-Kupplungsanordnung
- 73.: Getriebeeingangswelle
- 74.: Innenlamellenträger
- 75.: Nabelteil
- 76.: Getriebeeingangswelle
- 77.: Betätigungshebel
- 78.: Betätigungshebel
- 81.: Drucktopf
- 82.: Lamelle
- 84.: Pumpenantriebsrohr
- 86.: Durchtrittsöffnung
- 90.: Pfeil
- 91.: Pfeil
- 92.: Pfeil
- 93.: Pfeil
- 94.: Pfeil
- 100.: Pfeil
- 101.: Kühlmediumverteilkörper
- 102.: Kühlmediumverteilkörper
- 103.: Kühlmediumverteilkörper
- 104.: Kühlmediumverteilkörper
- 105.: Kühlmediumverteilkörper

## Patentansprüche

1. Kühlmediumverteileinrichtung für eine nasslaufende Kupplungseinrichtung (56) mit mehreren Kühlmediumverteilflächen (21-23), an denen entlang Kühlmedium radial nach außen gefördert wird, wobei die Kühlmediumverteilflächen (21-23) so ausgeführt sind, dass das radial nach außen geförderte Kühlmedium unterschiedliche axiale Kühlmediumabspritzstellen und/oder Kühlmediumabspritzrichtungen aufweist, wobei die Kühlmediumverteileinrichtung (1) einen Kühlmediumverteilkörper (20) umfasst der im Wesentlichen die Gestalt einer Kreisringscheibe aufweist, wobei die Kühlmediumverteilflächen (21-23) auf einer Seite des Kühlmediumverteilkörpers (20) vorgesehen sind, wobei die Kühlmediumverteilflächen (21-23) an Rampen vorgesehen sind, die radial nach außen, in Umfangsrichtung betrachtet, unterschiedliche Steigungen aufweisen.

2. Kühlmediumverteileinrichtung nach einem der vorhergehenden Ansprüche, **dadurch gekennzeichnet, dass** die Kühlmediumverteilflächen (21-23) von Stegen (25-28) begrenzt sind.

3. Kühlmediumverteileinrichtung nach einem der vorhergehenden Ansprüche, **dadurch gekennzeichnet, dass** die Kühlmediumverteileinrichtung (1) eine Antriebshülse (32) umfasst.

4. Kühlmediumverteileinrichtung nach einem der vorhergehenden Ansprüche, **dadurch gekennzeichnet, dass** die Antriebshülse (32) Kopplungselemente (34, 35) aufweist.

5. Kühlmediumverteileinrichtung nach einem der vorhergehenden Ansprüche, **dadurch gekennzeichnet, dass** die Kühlmediumverteileinrichtung (1) einen Aufnahmeteller (2) umfasst.

6. Kühlmediumverteileinrichtung nach Anspruch 5, **dadurch gekennzeichnet, dass** die Aufnahmeteller (2) radial außen Kopplungselemente (5-7) aufweist.

7. Kühlmediumverteileinrichtung nach einem der vorhergehenden Ansprüche, **dadurch gekennzeichnet, dass** die Kühlmediumverteilflächen (21-23) radial außen eine scharfe Kante aufweisen.

8. Nasslaufende Kupplungseinrichtung (6) mit antriebsseitigen und abtriebsseitigen Reibeinheiten, die aus einer Mehrzahl schichtweise in axialer Richtung antriebsseitig und abtriebsseitig abwechselnder Reibpartner gebildet sind, die zur Bildung eines Reibeingriff axial miteinander verpressbar sind, mit einer Kühlmediumverteileinrichtung (1) nach einem der Ansprüche 1 bis 7.

## Claims

1. Cooling medium distribution device for a wet-running clutch device (56), having a plurality of cooling medium distribution surfaces (21-23) along which cooling medium is conducted in a radially outward direction, with the cooling medium distribution surfaces (21-23) being designed such that the cooling medium which is conducted in the radially outward direction has different axial cooling medium ejection points and/or cooling medium ejection directions, **characterized in that** the cooling medium distribution device (1) comprises a cooling medium distribution body (20) which is substantially in the form of an annular disc, wherein the cooling medium distribution surfaces (21-23) are provided on one side of the cooling medium distribution body (20), wherein the cooling medium distribution surfaces (21-23) are provided on ramps which have gradients which, when viewed in the circumferential direction, vary in the radially outward direction.

2. Cooling medium distribution device according to one of the preceding claims, **characterized in that** the cooling medium distribution surfaces (21-23) are delimited by webs (25-28).

3. Cooling medium distribution device according to either of the preceding claims, **characterized in that** the cooling medium distribution device (1) comprises a drive sleeve (32).

4. Cooling medium distribution device according to one of the preceding claims, **characterized in that** the drive sleeve (32) has coupling elements (34, 35).

5. Cooling medium distribution device according to one of the preceding claims, **characterized in that** the cooling medium distribution device (1) has a holding plate (2).

6. Cooling medium distribution device according to Claim 5, **characterized in that** the holding plate (2) has coupling elements (5-7) radially at the outside.

7. Cooling medium distribution device according to one of the preceding claims, **characterized in that** the cooling medium distribution surfaces (21-23) have a sharp edge radially at the outside.

8. Wet-running clutch device (6) having drive-input-side and drive-output-side friction units which are formed from a plurality of drive-input-side and drive-output-side friction partners which are arranged in alternating layers in the axial direction, which drive-input-side and drive-output-side friction partners can be pressed together axially so as to come into frictional engagement, having a cooling medium distribution device (1) according to one of Claims 1 to 7.

## Revendications

1. Dispositif de répartition de fluide de refroidissement pour un dispositif d'embrayage (56) à fonctionnement humide, comportant plusieurs faces de répartition de fluide de refroidissement (21-23), le long desquelles un fluide de refroidissement est mené radialement vers l'extérieur, dans lequel les faces de répartition de fluide de refroidissement (21-23) sont réalisées de telle manière que le fluide de refroidissement mené radialement vers l'extérieur présente différents points axiaux de projection de fluide de refroidissement et/ou différentes directions axiales de projection de fluide de refroidissement, **caractérisé en ce que** le dispositif de répartition de fluide de refroidissement (1) comprend un corps de répartition de fluide de refroidissement (20), qui présente essentiellement la forme d'un disque annulaire circulaire, dans lequel les faces de répartition de fluide de refroidissement (21-23) sont prévues sur un côté du corps de répartition de fluide de refroidissement (20), dans lequel les faces de répartition de fluide de refroidissement (21-23) sont prévues dans des rampes qui, considérées dans la direction périphérique, présentent des pentes différentes radialement vers l'extérieur.

2. Dispositif de répartition de fluide de refroidissement selon l'une quelconque des revendications précédentes, **caractérisé en ce que** les faces de répartition de fluide de refroidissement (21-23) sont limitées par des nervures (25-28).

3. Dispositif de répartition de fluide de refroidissement selon l'une quelconque des revendications précédentes, **caractérisé en ce que** le dispositif de répartition de fluide de refroidissement (1) comprend une douille d'entraînement (32).

4. Dispositif de répartition de fluide de refroidissement selon l'une quelconque des revendications précédentes, **caractérisé en ce que** la douille d'entraînement (32) comprend des éléments d'embrayage (34, 35).

5. Dispositif de répartition de fluide de refroidissement selon l'une quelconque des revendications précédentes, **caractérisé en ce que** le dispositif de répartition de fluide de refroidissement (1) comprend un plateau récepteur (2).

6. Dispositif de répartition de fluide de refroidissement selon la revendication 5, **caractérisé en ce que** le plateau récepteur (2) comprend des éléments d'embrayage (5-7) radialement à l'extérieur.

7. Dispositif de répartition de fluide de refroidissement selon l'une quelconque des revendications précédentes, **caractérisé en ce que** les faces de répartition de fluide de refroidissement (21-23) présentent une arête vive radialement à l'extérieur.

8. Dispositif d'embrayage à fonctionnement humide (6) avec des unités de friction côté entraînement et côté sortie, qui sont formées par une pluralité de partenaires de friction qui sont disposés en couches alternées en direction axiale, côté entraînement et côté sortie, qui peuvent être pressés l'un contre l'autre axialement pour former un engagement par friction, avec un dispositif de répartition de fluide de refroidissement (1) selon l'une quelconque des revendications 1 à 7.
